# EUROPEAN PATENT SPECIFICATION

(11) **EP 4 071 019 B1**
(45) Date of publication and mention of the grant of the patent: **22.04.2026**
(21) Application number: 22159770.1
(22) Date of filing: 02.03.2022
(51) Int. Cl.: B60W 30/06, G08G 1/16

(54) **AUTOMATED VALET PARKING SYSTEM AND CONTROL METHOD OF AUTOMATED VALET PARKING SYSTEM**
AUTOMATISCHES PARKSYSTEM UND VERFAHREN ZUR STEUERUNG EINES AUTOMATISCHEN PARKSYSTEMS
SYSTÈME DE STATIONNEMENT AUTOMATISÉ DE VOITURIER ET PROCÉDÉ DE COMMANDE DE SYSTÈME DE STATIONNEMENT AUTOMATISÉ DE VOITURIER

(30) Priority: 05.03.2021 JP 2021035545
(43) Date of publication of application: 12.10.2022
(73) Proprietor: TOYOTA JIDOSHA KABUSHIKI KAISHA, Toyota-shi Aichi 471-8571 (JP)
(72) Inventor: MARUIWA, Nobutsugu, TOYOTA-SHI, AICHI 471-8571 (JP)
(74) Representative: Cabinet Beau de Loménie

(56) References cited:
- DE-A1- 102019 002 151
- DE-A1- 102019 209 042
- JP-A- 2020 077 213
- US-A1- 2018 350 238
- US-A1- 2020 346 663
- US-B1- 10 513 274
- US-B2- 10 861 183

## Description

### TECHNICAL FIELD

The present disclosure relates to an automated valet parking system and a control method of an automated valet parking system.

### BACKGROUND

In the related art, Japanese Unexamined Patent Publication No. 2020-77213 is known as a technical document relating to an automated valet parking system. This publication discloses a parking place operation system in which a manually driven vehicle driven by a person and a vehicle of an autonomous driving vehicle that can be autonomously driven are mixed and parked in the same parking place. US 2018/0350238 discloses a method for controlling traffic in a parking environment used by manually operated participants and by automatically operated participants, disclosing features of the preamble of claim 1. US 10,513,274 discloses an apparatus and a method for notifying a driver of status information of a surrounding vehicle, wherein the driver is notified whether the surrounding vehicle activates an autonomous mode.

### SUMMARY

However, in a parking place where an autonomous driving vehicle and a general vehicle (another vehicle) which is a manually driven vehicle are mixed, which is instructed by a server of the parking place, since the general vehicle may not discriminate which vehicle is the autonomous driving vehicle, there is room for improvement.

According to one aspect of the present disclosure, there is provided an automated valet parking system according to claim 1.

In accordance with the automated valet parking system according to one aspect of the present disclosure, since the notification of the presence of the first notification target vehicle which is the autonomous driving vehicle as the notification target can be sent to the server communicable vehicle that can communicate with the parking place control server among the general vehicles, it is possible to prevent the server communicable vehicle from erroneously recognizing the autonomous driving vehicle as the manually driven general vehicle.

In the automated valet parking system, the parking place control server may include a stop instruction unit configured to, when the general vehicle is approaching from behind the autonomous driving vehicle or when the general vehicle is traveling to cross in front of the autonomous driving vehicle, stop the autonomous driving vehicle until the general vehicle passes by.

According to another aspect of the present disclosure, there is provided a control method of an automated valet parking system according to claim 3.

In accordance with the control method of the automated valet parking system according to another aspect of the present disclosure, since the notification of the presence of the first notification target vehicle which is the autonomous driving vehicle as the notification target can be sent to the server communicable vehicle that can communicate with the parking place control server among the general vehicles, it is possible to prevent the server communicable vehicle from erroneously recognizing the autonomous driving vehicle as a manually driven general vehicle.

In accordance with each aspect of the present disclosure, it is possible to prevent the server communicable vehicle in the parking place from erroneously recognizing the autonomous driving vehicle as the general vehicle.

### BRIEF DESCRIPTION OF THE DRAWINGS

FIG. 1 is a diagram for describing an automated valet parking system according to an embodiment.
FIG. 2 is a plan view illustrating an example of a parking place where automated valet parking is performed.
FIG. 3 is a diagram illustrating an example of a hardware configuration of a parking place control server.
FIG. 4 is a diagram illustrating an example of a functional configuration of the parking place control server.
FIG. 5A is a diagram illustrating an example of determination of a first notification target vehicle by a distance. FIG. 5B is a diagram illustrating an example of determination of the first notification target vehicle by traveling in the same lane.
FIG. 6 is a diagram illustrating an example of determination of the first notification target vehicle by a distance from a target route of an autonomous driving vehicle.
FIG. 7A is a diagram illustrating an example of a situation in which a general vehicle is approaching from behind the autonomous driving vehicle. FIG. 7B is a diagram illustrating an example in which the autonomous driving vehicle is stopped. FIG. 7C is a diagram illustrating another example in which the autonomous driving vehicle is stopped.
FIG. 8A is a diagram illustrating an example of a situation in which the general vehicle joins in front of the autonomous driving vehicle. FIG. 8B is a diagram illustrating an example in which the autonomous driving vehicle is stopped.
FIG. 9 is a block diagram illustrating an example of the autonomous driving vehicle.
FIG. 10 is a flowchart illustrating an example of vehicle discrimination processing.
FIG. 11A is a flowchart illustrating an example of first notification target vehicle notification processing. FIG. 11B is a flowchart illustrating an example of inter-vehicle communication connection processing.

### DETAILED DESCRIPTION

Hereinafter, an embodiment of the present disclosure will be described with reference to the drawings.

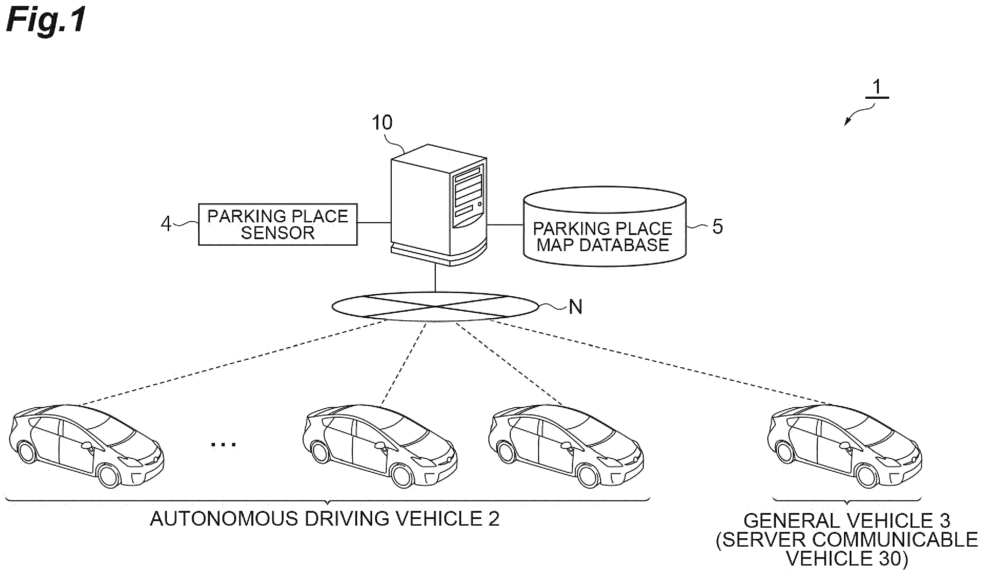

FIG. 1 is a diagram for describing an automated valet parking system according to the embodiment. An automated valet parking system (AVPS) 1 illustrated in FIG. 1 is a system for performing automated valet parking of a plurality of autonomous driving vehicles 2 in a parking place. The automated valet parking system 1 has a parking place control server 10 for performing automated valet parking.

The automated valet parking is a service that allows a driverless autonomous driving vehicle 2, after a user (occupant) has got out of the vehicle at a drop-off area in a parking place, to travel on a target route according to an instruction from the parking place side, and that automatically parks the vehicle in a target parking space in the parking place. The target parking space is a parking space preset as a parking position of the autonomous driving vehicle 2. The target route is a route in the parking place where the autonomous driving vehicle 2 travels to reach the target parking space. The target route at the time of pick-up is a route on which the vehicle travels to reach a pick up space to be described later.

Hereinafter, vehicles that perform autonomous driving in automated valet parking will be referred to as autonomous driving vehicles 2, and a vehicle manually driven by a driver will be referred to as a general vehicle 3. The general vehicle 3 has an autonomous driving function, but also includes a vehicle that selects to park by the manual driving of the driver. The general vehicle 3 may be a server communicable vehicle 30 that can communicate with the parking place control server 10, or a server incommunicable vehicle 31 that cannot communicate with the parking place control server 10.

Even though the parking place control server 10 cannot communicate with an in-vehicle device of the general vehicle 3, when a mobile terminal of a driver of the general vehicle 3 and the parking place control server 10 can communicate with each other (for example, when an application linked with the parking place control server 10 is installed on the mobile terminal), the general vehicle 3 may be handled as (or considered as) a server communicable vehicle 30.

The parking place in the present embodiment is a parking place commonly used by the autonomous driving vehicle and the general vehicle that perform automated valet parking. An area where the autonomous driving vehicle is parked and an area where the general vehicle is parked may be separated.

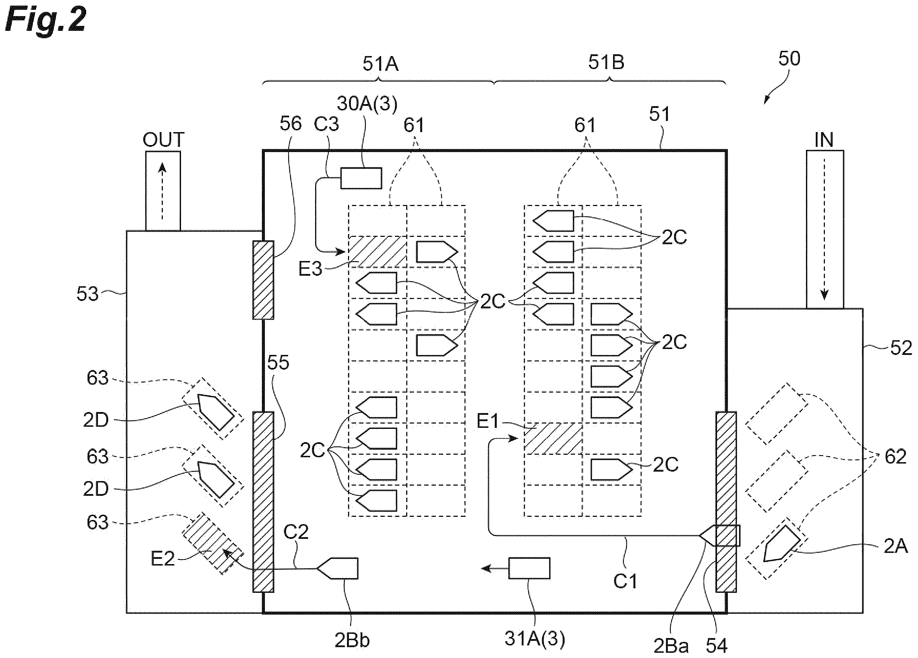

Here, FIG. 2 is a plan view illustrating an example of a parking place where automated valet parking is performed. FIG. 2 illustrates a parking place 50, a parking area 51, a drop-off area 52, and a pick-up area 53. The parking place 50 includes the parking area 51, the drop-off area 52, and the pick-up area 53. The drop-off area 52 and the pick-up area 53 do not need to be provided separately, and may be provided as an integrated platform.

The parking area 51 is a place where parking spaces (parking frames) 61 in which the autonomous driving vehicles 2 are parked by the automated valet parking are formed. As illustrated in FIG. 2, for example, a plurality of parking spaces 61 are formed side by side in one direction (for example, a vehicle width direction of a parked vehicle).

The drop-off area 52 is provided near an entrance side of the parking place 50, and is a place where an occupant gets out of the autonomous driving vehicle 2 before entering the parking space. Drop-off spaces 62 for the autonomous driving vehicle 2 to stop when the occupant gets out of the vehicle are formed in the drop-off area 52. The drop-off area 52 leads to the parking area 51 via a parking area entrance gate 54.

The pick-up area 53 is provided near an exit side of the parking place 50, and is a place where the occupant gets on the autonomous driving vehicle 2 that has been picked up. Pick up spaces 63 where the autonomous driving vehicle 2 waits for the occupant to get on the vehicle are formed in the pick-up area 53. The pick-up area 53 leads to the parking area 51 via a parking area exit gate 55. A return gate 56 for returning the autonomous driving vehicle 2 from the pick-up area 53 to the parking area 51 is provided between the pick-up area 53 and the parking area 51. It is not essential to provide the return gate 56 in the parking place 50.

In FIG. 2, an autonomous driving vehicle 2A stopped in the drop-off space 62 of the drop-off area 52, autonomous driving vehicles 2Ba and 2Bb traveling in the parking place 50, autonomous driving vehicles 2C parked in the parking spaces 61 of the parking area 51, autonomous driving vehicles 2D stopped in the pick-up spaces 63 of the pick-up area 53, and a server communicable vehicle 30A and a server incommunicable vehicle 31A traveling in the parking area 51 are illustrated.

In the automated valet parking system 1, for example, after the autonomous driving vehicle 2 that has entered the parking place 50 drops off the occupant in the drop-off space 62 (corresponding to the autonomous driving vehicle 2A), the automated valet parking is started by obtaining an instruction authority of the autonomous driving vehicle 2. The automated valet parking system 1 causes the autonomous driving vehicle 2Ba to travel along a target route C1, and causes the autonomous driving vehicle 2Ba to be parked in a target parking space E1. The automated valet parking system 1 causes the autonomous driving vehicle 2Bb that is parked to travel along a target route C2 toward the pick-up area 53 in response to a pick up request, and causes the autonomous driving vehicle to wait for the occupant to arrive in the pick up space 63 (target parking space E2).

The automated valet parking system 1 indicates a target route C3 and a target parking space E3 for the server communicable vehicle 30A in response to a guidance request of the server communicable vehicle 30A. A driver of the server communicable vehicle 30A drives the vehicle along the indicated target route C3 and manually parks the vehicle in the target parking space E3. The automated valet parking system 1 may not necessarily guide the server communicable vehicle 30A.

On the other hand, the server incommunicable vehicle 31A is parked in any parking space with the determination of the driver. A driver of the server incommunicable vehicle 31 may be guided to the target route or the target parking space by using a display or the like provided in the parking place 50.

### [Configuration of Automated Valet Parking System]

Next, a configuration of the automated valet parking system 1 will be described with reference to the drawings. As illustrated in FIG. 1, the automated valet parking system 1 includes the parking place control server 10. The parking place control server 10 is a server for managing the parking place.

The parking place control server 10 is configured to be able to communicate with the autonomous driving vehicles 2. The autonomous driving vehicle 2 will be described in detail later. The parking place control server 10 may be provided in the parking place or may be provided in a facility away from the parking place. The parking place control server 10 may include a plurality of computers provided at different positions. The parking place control server 10 is connected to a parking place sensor 4 and a parking place map database 5.

The parking place sensor 4 is a sensor for recognizing the status of a parking place. The parking place sensor 4 includes, for example, a surveillance camera for detecting a position of the vehicle in the parking place. The surveillance camera is provided on a ceiling or a wall of the parking place, and captures an image of the autonomous driving vehicle 2 in the parking place. The surveillance camera transmits the captured image to the parking place control server 10.

The parking place sensor 4 may include an emptiness sensor (or availability sensor) for detecting whether or not there is the parked vehicle in the parking frame (whether the parking frame is occupied or empty). The emptiness sensor may be provided for each parking frame, or may be provided on a ceiling or the like to be able to monitor a plurality of parking frames by one sensor. The configuration of the emptiness sensor is not particularly limited, and a known configuration can be employed. The emptiness sensor may be a pressure sensor, a radar sensor or a sonar sensor using radio waves, or a camera. The emptiness sensor transmits emptiness information in the parking frame to the parking place control server 10. The parking place sensor 4 may include a gate sensor that detects a vehicle (entering vehicle) passing through an entrance gate of the parking place. The entrance gate can be provided, for example, in front of the drop-off area 52.

The parking place map database 5 is a database that stores parking place map information. The parking place map information includes positional information of the parking frame in the parking place and information on a traveling path in the parking place. The parking place map information may include positional information of a landmark used for position recognition of the autonomous driving vehicle 2. The landmark includes at least one of a white line, a pole, a safety cone, a pillar of the parking place, and the like.

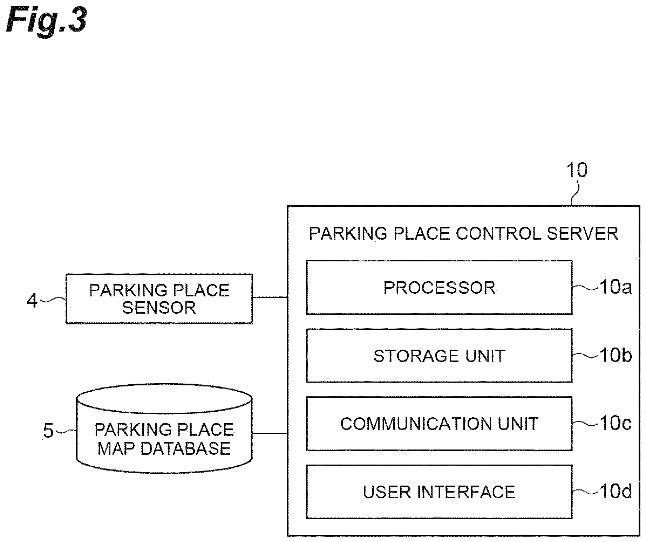

A hardware configuration of the parking place control server 10 will be described. FIG. 3 is a block diagram illustrating an example of the hardware configuration of the parking place control server. As illustrated in FIG. 3, the parking place control server 10 is a general computer that includes a processor 10a, a storage unit 10b, a communication unit 10c, and a user interface 10d.

The processor 10a operates various operating systems to control the parking place control server 10. The processor 10a is an arithmetic logic unit such as a central processing unit (CPU) including a control device, an arithmetic device, a register, and the like. The processor 10a controls the storage unit 10b, the communication unit 10c, and the user interface 10d. The storage unit 10b is, for example, a recording medium including at least one of a read only memory (ROM), a random access memory (RAM), a hard disk drive (HDD), and a solid state drive (SSD).

The communication unit 10c is a communication device for performing wireless communication through a network. As the communication unit 10c, a network device, a network controller, a network card, or the like can be used. The parking place control server 10 communicates with the autonomous driving vehicles 2 by using the communication unit 10c. The user interface 10d is an input and output unit of the parking place control server 10 for an administrator of the parking place control server 10 or the like. The user interface 10d includes an output device such as a display and a speaker, and an input device such as a touch panel.

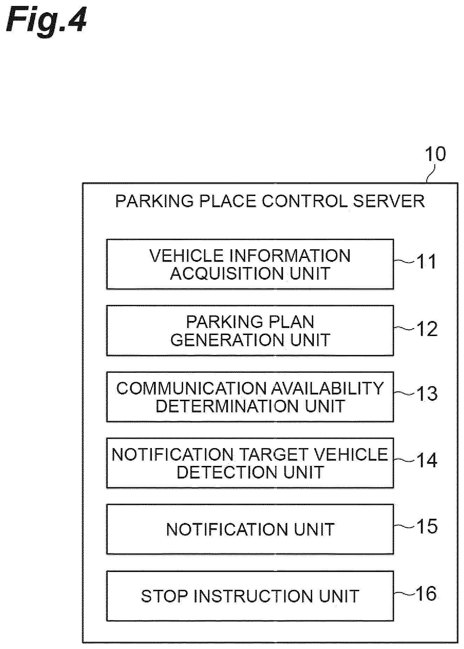

Next, a functional configuration of the parking place control server 10 will be described. FIG. 4 is a diagram illustrating an example of the functional configuration of the parking place control server 10. The parking place control server has a vehicle information acquisition unit 11, a parking plan generation unit 12, a communication availability determination unit 13, a notification target vehicle detection unit 14, a notification unit 15, and a stop instruction unit 16.

The vehicle information acquisition unit 11 detects an entering vehicle for the parking place based on the detection result of the parking place sensor 4 (for example, the detection result of the gate sensor of the entrance gate or the image recognition result of the surveillance camera in the parking place). The vehicle information acquisition unit 11 may detect the entering vehicle of the parking place by communicating with the autonomous driving vehicle 2 that can communicate with the parking place control server 10 or the server communicable vehicle 30. The vehicle information acquisition unit 11 may not necessarily detect the entering vehicle.

The vehicle information acquisition unit 11 determines whether or not the entering vehicle is an autonomous driving vehicle 2 that is a target of automated valet parking. The vehicle information acquisition unit 11 determines whether or not the entering vehicle is an autonomous driving vehicle 2 based on, for example, communication information from the entering vehicle to the parking place control server 10. The vehicle that is not determined to be an autonomous driving vehicle 2 and is manually driven by the driver is a general vehicle 3 (server communicable vehicle 30 or server incommunicable vehicle 31).

The vehicle information acquisition unit 11 acquires vehicle information in the parking place by the detection result of the parking place sensor 4 or communication with the vehicle in the parking place (autonomous driving vehicle 2 or server communicable vehicle 30). The vehicle information includes positional information of the vehicle in the parking place. The vehicle information acquisition unit 11 may acquire the positional information of the vehicle including the server incommunicable vehicle 31 from the detection result of the parking place sensor 4 (for example, an installation position of the surveillance camera in the parking place and the image recognition result). The acquisition method of the positional information of the vehicle in the parking place is not particularly limited, and various well-known methods can be employed. The vehicle information acquisition unit 11 may acquire the positional information of the vehicle through communication with the mobile terminal of the driver.

The vehicle information may include identification information of the vehicle. The identification information may be information capable of specifying the vehicle, may be an identification number (ID number) acquired through communication, may be a vehicle number, may be a reservation number for automated valet parking, or the like. In the case of the server incommunicable vehicle 31, a number of a license plate recognized from an image captured by a camera of the parking place sensor 4 may be used as the identification information.

The vehicle information of the autonomous driving vehicle 2 may include recognition results of a traveling state of the autonomous driving vehicle 2 and an external environment. The recognition of the traveling state and the external environment will be described later. The vehicle information of the autonomous driving vehicle 2 may include information on the remaining mileage or remaining fuel of the autonomous driving vehicle 2.

The vehicle information acquisition unit 11 continuously acquires the vehicle information from the autonomous driving vehicle 2 while automated valet parking is executed. While the autonomous driving vehicle 2 is parked, the vehicle information acquisition unit 11 may interrupt the acquisition of the vehicle information, or may periodically acquire the vehicle information.

The vehicle information acquisition unit 11 recognizes a status of the autonomous driving vehicle 2 during automated valet parking based on the acquired vehicle information. The status of the autonomous driving vehicle 2 includes the position of the autonomous driving vehicle 2 in the parking place. The status of the autonomous driving vehicle 2 may include a vehicle speed of the autonomous driving vehicle 2, may include a yaw rate of the autonomous driving vehicle 2, and may include a distance between the autonomous driving vehicle 2 and another surrounding vehicle.

The parking plan generation unit 12 generates a parking plan, which is a traveling plan for parking the autonomous driving vehicle 2, based on the vehicle information acquired by the vehicle information acquisition unit 11. The parking plan includes a target parking space in which the autonomous driving vehicle 2 is to park and a target route to the target parking space. For example, when a vehicle entrance request (start request for automated valet parking) is received from the autonomous driving vehicle 2 that has entered the parking place, the parking plan generation unit 12 starts generating the parking plan. The vehicle entrance request may be issued from the user terminal of the occupant instead of the autonomous driving vehicle 2.

The parking plan generation unit 12 sets the target parking space based on an empty status of the parking frame in the parking place recognized from the detection result of the parking place sensor 4. The parking plan generation unit 12 sets a target parking space for a parking space (parking frame) preset in the parking place. The parking plan generation unit 12 may set an appropriate target parking space corresponding to the size of the autonomous driving vehicle 2 based on the vehicle body information of the autonomous driving vehicle 2.

The parking plan generation unit 12 sets a target route toward the target parking space from a current position of the autonomous driving vehicle 2 based on the positional information of the autonomous driving vehicle 2 acquired by the vehicle information acquisition unit 11, positional information of the target parking space, and the parking place map information of the parking place map database 5.

The parking plan generation unit 12 sets a target route on the traveling path in the parking place. The target route does not necessarily have to be a shortest distance, and a route that does not interfere with or has less interference with a target route of another autonomous driving vehicle 2 may be preferentially selected. The setting method of the target route is not particularly limited, and various well-known methods can be employed.

The parking plan generation unit 12 may set a target route and a target parking space for the server communicable vehicle 30 manually driven by the driver, and may provide guidance (information provision) on the target route and the target parking space. The parking plan generation unit 12 may set a target parking space based on an empty status of the parking frame in the parking place, and may provide information on the target route for the server communicable vehicle 30 to reach the target parking space.

The communication availability determination unit 13 determines whether or not the general vehicle 3 can communicate with the parking place control server 10. In other words, the communication availability determination unit 13 determines whether the general vehicle 3 is a server communicable vehicle 30 or a server incommunicable vehicle 31.

For example, the communication availability determination unit 13 determines whether the vehicle is the server communicable vehicle 30 or the server incommunicable vehicle 31 based on whether or not communication with the parking place control server 10 is available during entrance. The communication availability determination unit 13 may determine whether the vehicle is the server communicable vehicle 30 or the server incommunicable vehicle 31 from a declaration of the driver during entrance (a button operation of the driver on the device provided at the entrance gate or the like). The communication availability determination unit 13 may not necessarily determine whether or not communication is available during entrance. The communication availability determination unit 13 may determine whether or not communication is available at any timing at which the general vehicle 3 travels in the parking place, or may provide a stop space for determining whether or not communication is available at any position in the parking place.

The notification target vehicle detection unit 14 detects a first notification target vehicle based on the positional information of the autonomous driving vehicle 2 and the positional information of the server communicable vehicle 30. The first notification target vehicle is the autonomous driving vehicle 2, detected or identified as a notification target for the server communicable vehicle 30.

When the autonomous driving vehicle 2 is present in the same set area as the server communicable vehicle 30 for one or a plurality of set areas set in the parking place, the notification target vehicle detection unit 14 may detect the autonomous driving vehicle 2 as a first notification target vehicle. The set area can be set as any area. The set area can be acquired by referring to the parking place map information.

Here, the set area is described by using a first parking area 51A (set area) set for the parking area 51 of FIG. 2. In the situation illustrated in FIG. 2, the notification target vehicle detection unit 14 detects, as the first notification target vehicle, the autonomous driving vehicle 2Bb in the first parking area 51A (the set area near the exit side of the parking area 51) in which the server communicable vehicle 30A is positioned.

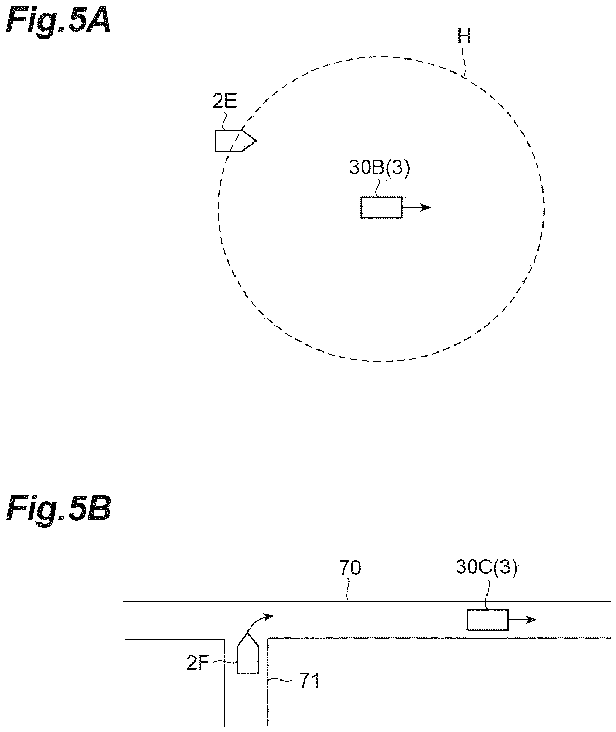

The notification target vehicle detection unit 14 may detect, as the first notification target vehicle, the autonomous driving vehicle 2 positioned within a certain distance of the server communicable vehicle 30. Here, FIG. 5A is a diagram illustrating an example of the determination of the first notification target vehicle based on the distance. FIGS. 5A and 5B illustrate a server communicable vehicle 30B, an autonomous driving vehicle 2E, and a range H of a certain distance from the server communicable vehicle 30B.

In the situation illustrated in FIG. 5A, the notification target vehicle detection unit 14 detects, as the first notification target vehicle, the autonomous driving vehicle 2E that has entered within a certain distance (within the range H) of the server communicable vehicle 30B.

The notification target vehicle detection unit 14 may detect, as the first notification target vehicle, the autonomous driving vehicle 2 traveling on the same lane (traveling path) as the server communicable vehicle 30. The lane can be acquired by referring to the parking place map information.

FIG. 5B is a diagram illustrating an example of the determination of the first notification target vehicle by traveling on the same lane. FIG. 5B illustrates a server communicable vehicle 30C, an autonomous driving vehicle 2F, a lane 70 on which the server communicable vehicle 30C travels, and a lane 71 connected to the lane 70. The autonomous driving vehicle 2F is performing a right turn to enter the lane 70 from the lane 71. In the situation illustrated in FIG. 5B, the notification target vehicle detection unit 14 detects, as the first notification target vehicle, the autonomous driving vehicle 2F that has entered the lane 70 on which the server communicable vehicle 30C travels.

The notification target vehicle detection unit 14 may detect the first notification target vehicle based on a distance between the target route of the autonomous driving vehicle 2 (a route on which the autonomous driving vehicle 2 is scheduled to travel) and the server communicable vehicle 30. For example, when the distance between the target route of the autonomous driving vehicle 2 and the server communicable vehicle 30 is less than a route distance threshold value, the notification target vehicle detection unit 14 may detect or identify the autonomous driving vehicle 2 as a first notification target vehicle. The route distance threshold value is a threshold value of a preset value.

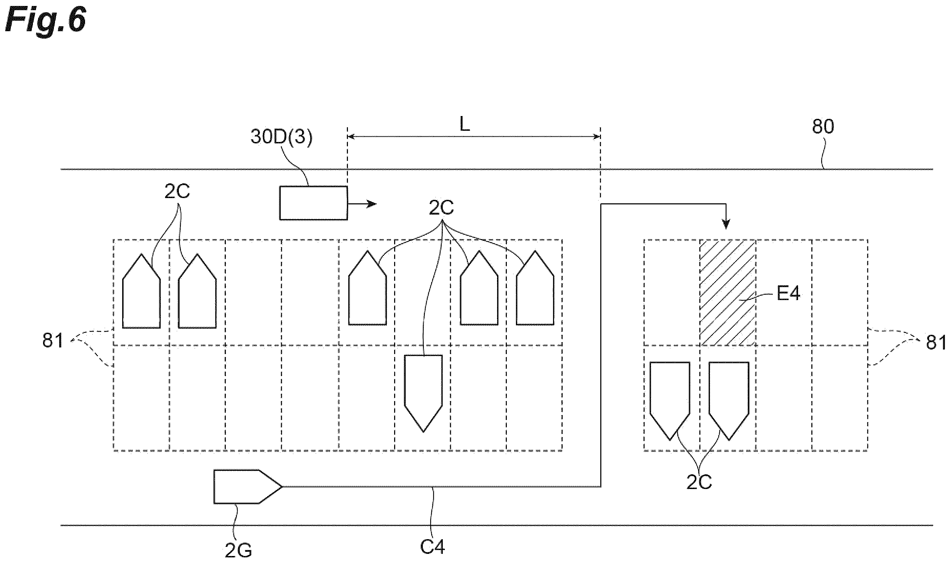

FIG. 6 is a diagram illustrating an example of the determination of the first notification target vehicle based on the distance of the autonomous driving vehicle 2 from the target route. FIG. 6 illustrates a parking place 80, a parking frame 81, an autonomous driving vehicle 2G, a target route C4 of the autonomous driving vehicle 2G, a target space E4 of the autonomous driving vehicle 2G, and a server communicable vehicle 30D. A distance L between the server communicable vehicle 30D and the target route C4 is illustrated. The distance L is a distance less than the above-mentioned route distance threshold value.

In the situation illustrated in FIG. 6, the notification target vehicle detection unit 14 detects the autonomous driving vehicle 2G as a first notification target vehicle from the fact that the distance L between the server communicable vehicle 30D and the target route C4 is less than the route distance threshold value.

The notification target vehicle detection unit 14 may use a combination of a plurality of conditions described above in the detection of a first notification target vehicle. The notification target vehicle detection unit 14 may detect the autonomous driving vehicle 2 as a first notification target vehicle when the autonomous driving vehicle is positioned within a certain distance of the server communicable vehicle 30 within the same set area. That is, even though the autonomous driving vehicle 2 is positioned within a certain distance of the server communicable vehicle 30, when the server communicable vehicle and the autonomous driving vehicle are included in different set areas, the autonomous driving vehicle may not be detected as a first notification target vehicle.

The notification target vehicle detection unit 14 may detect, as a first notification target vehicle, the autonomous driving vehicle 2 positioned within a certain distance of the server communicable vehicle 30 and traveling on the same lane. The notification target vehicle detection unit 14 may detect, as a first notification target vehicle, the autonomous driving vehicle 2 positioned within a certain distance of the server communicable vehicle 30. The distance between the target route of the autonomous driving vehicle 2 and the server communicable vehicle 30 is less than a route distance threshold value. A collision margin time may be used instead of the distance. The notification target vehicle detection unit 14 may not detect, as a first notification target vehicle, the autonomous driving vehicle 2 traveling in a direction away from the server communicable vehicle 30.

The notification target vehicle detection unit 14 detects or identifies a second notification target vehicle based on the positional information of the autonomous driving vehicle 2 and the positional information of the server incommunicable vehicle 31. The second notification target vehicle is the autonomous driving vehicle 2 detected as a notification target for the server incommunicable vehicle 31.

The notification target vehicle detection unit 14 can detect a second notification target vehicle for the server incommunicable vehicle 31 by the same method as the first notification target vehicle.

For example, in the situation illustrated in FIG. 2, the notification target vehicle detection unit 14 may detect, as a second notification target vehicle, the autonomous driving vehicle 2Ba in the second parking area 51B (a set area near the entrance side of the parking area 51) where the server incommunicable vehicle 31A is positioned.

For example, the notification target vehicle detection unit 14 may detect, as a second notification target vehicle, the autonomous driving vehicle 2 positioned within a certain distance of the server incommunicable vehicle 31 (see FIG. 5A). In this case, the certain distance for detecting the second notification target vehicle is a longer distance than the certain distance for detecting the first notification target vehicle. The notification target vehicle detection unit 14 may detect, as a second notification target vehicle, the autonomous driving vehicle 2 traveling on the same lane (traveling path) as the server incommunicable vehicle 31 (see FIG. 5B).

When the distance between the target route of the autonomous driving vehicle 2 and the server incommunicable vehicle 31 is less than a second route distance threshold value, the notification target vehicle detection unit 14 detects the autonomous driving vehicle 2 as a second notification target vehicle (see FIG. 6). The second route distance threshold value is a threshold value larger than the route distance threshold value of the first notification target vehicle.

When a second notification target vehicle is detected, the notification target vehicle detection unit 14 determines whether or not inter-vehicle communication between the server incommunicable vehicle 31 and the second notification target vehicle is available. For example, the notification target vehicle detection unit 14 determines whether or not the inter-vehicle communication is available by causing the second notification target vehicle to perform inter-vehicle communication connection to the server incommunicable vehicle 31. When it is determined that the inter-vehicle communication is available, the notification target vehicle detection unit 14 establishes the inter-vehicle communication between the second notification target vehicle and the server incommunicable vehicle 31. The driver of the general vehicle 3 may input in advance whether or not the inter-vehicle communication or server communication is available.

When the notification target vehicle detection unit 14 detects the first notification target vehicle, the notification unit 15 notifies the server communicable vehicle 30 of the presence of the first notification target vehicle. The notification unit 15 notifies the server communicable vehicle 30 that can communicate with the parking place control server 10 of the presence of the first notification target vehicle by communication (e.g., wireless communication). In the server communicable vehicle 30, the notification of the presence of the first notification target vehicle is sent to the driver by, for example, voice or display. The notification method for the driver in the server communicable vehicle 30 is not particularly limited.

When the second notification target vehicle is detected by the notification target vehicle detection unit 14 and the server incommunicable vehicle 31 is connected to the second notification target vehicle by inter-vehicle communication, when an inter-vehicle distance between the server incommunicable vehicle 31 and the second notification target vehicle is less than a distance threshold value for the second notification target vehicle, or when the collision margin time between the server incommunicable vehicle 31 and the second notification target vehicle is less than a TTC threshold value (which may be a time-to-collision threshold value indicating a threshold value based on an estimated time to collision), the notification unit 15 instructs the second notification target vehicle by an approach notification instruction to notify the server incommunicable vehicle that the second notification target vehicle approaches by inter-vehicle communication. The distance threshold value and the TTC threshold value are threshold values of preset values.

In a case where the instruction about the approach notification is given to the second notification target vehicle, when the inter-vehicle distance between the server incommunicable vehicle 31 and the second notification target vehicle is less than the distance threshold value or when the collision margin time between the target vehicle between the server incommunicable vehicle 31 and the second notification target vehicle is less than the TTC threshold value, the notification of the approach of the second notification target vehicle is sent to the server incommunicable vehicle 31 by inter-vehicle communication. In the server incommunicable vehicle 31, the notification of the approach of the second notification target vehicle is sent to the driver by, for example, voice or display. The notification method for the driver in the server incommunicable vehicle 31 is not particularly limited.

The notification unit 15 may not necessarily perform or issue the approach notification instruction. When the notification target vehicle detection unit 14 detects a second notification target vehicle and the server incommunicable vehicle 31 is connected to the second notification target vehicle by inter-vehicle communication, the notification unit 15 may notify the server incommunicable vehicle 31 of the presence of the second notification target vehicle via inter-vehicle communication with the second notification target vehicle. Alternatively, it may be determined that the notification of the presence of the second notification target vehicle is achieved by the establishment of the inter-vehicle communication.

The notification unit 15 may notify the server incommunicable vehicle 31 of the approach of the second notification target vehicle with the parking place control server instead of causing the second notification target vehicle to issue the approach notification. When the inter-vehicle distance between the server incommunicable vehicle 31 and the second notification target vehicle is less than the distance threshold value based on the positional information of the server incommunicable vehicle 31 and the positional information of the second notification target vehicle acquired by the vehicle information acquisition unit 11 or when the collision margin time between the server incommunicable vehicle 31 and the second notification target vehicle is less than the TTC threshold value, the notification unit 15 may notify the server incommunicable vehicle 31 of the approach of the second notification target vehicle via inter-vehicle communication.

When the general vehicle 3 is approaching from behind the autonomous driving vehicle 2 or when the general vehicle 3 is traveling to cross in front of the autonomous driving vehicle 2, the stop instruction unit 16 stops the autonomous driving vehicle 2 until the general vehicle 3 passes by. The stop instruction unit 16 determines the stop of the autonomous driving vehicle 2 based on the positional information of the autonomous driving vehicle 2, the positional information of the general vehicle 3, and the parking place map information.

For example, when a distance between the autonomous driving vehicle 2 traveling on the same lane and the general vehicle 3 behind is less than a stop distance threshold value or when the collision margin time between the autonomous driving vehicle 2 traveling on the same lane and the general vehicle 3 behind is less than the stop TTC threshold value, the stop instruction unit 16 determines that the general vehicle 3 is approaching from behind the autonomous driving vehicle 2, and stops the autonomous driving vehicle 2 until the general vehicle 3 passes by.

When the lane has a width with which the vehicles can pass each other, the stop instruction unit 16 advances the general vehicle 3 first by stopping the autonomous driving vehicle 2 closer to an end of the lane. When the lane does not have a width with which the vehicles can pass each other, the stop instruction unit 16 may let the general vehicle 3 advance first by stopping the autonomous driving vehicle 2 in an empty parking space.

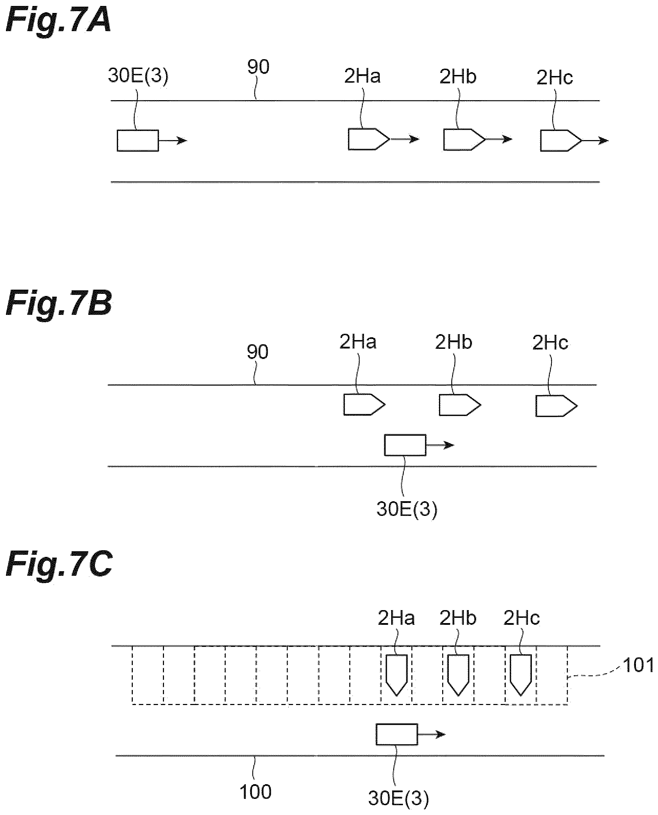

FIG. 7A is a diagram illustrating an example of a situation in which the general vehicle is approaching from behind the autonomous driving vehicle 2. FIG. 7B is a diagram illustrating an example in which the autonomous driving vehicle 2 is stopped. FIG. 7A illustrates a lane 90, three autonomous driving vehicles 2Ha to 2Hc during automated valet parking, and a server communicable vehicle 30E. The server communicable vehicle 30E is traveling behind three autonomous driving vehicles 2Ha to 2Hc on the same lane 90.

In the situation illustrated in FIG. 7A, the stop instruction unit 16 determines that the server communicable vehicle 30E is approaching from behind the autonomous driving vehicle 2. As illustrated in FIG. 7B, the stop instruction unit 16 causes the server communicable vehicle 30E to pass by stopping the autonomous driving vehicles 2Ha to 2Hc closer to an end of the lane 90.

FIG. 7C is a diagram illustrating another example in which the autonomous driving vehicle 2 is stopped. FIG. 7C illustrates a lane 100 and a parking space 101. As illustrated in FIG. 7C, when the vehicle is traveling in the lane 100 not having the width with which the autonomous driving vehicles 2Ha to 2Hc stop, the stop instruction unit 16 advances the server communicable vehicle 30E first by temporarily stopping the autonomous driving vehicles 2Ha to 2Hc in the parking space 101. The stop instruction unit 16 restarts the automated valet parking of the autonomous driving vehicles 2Ha to 2Hc after the server communicable vehicle 30E has passed by.

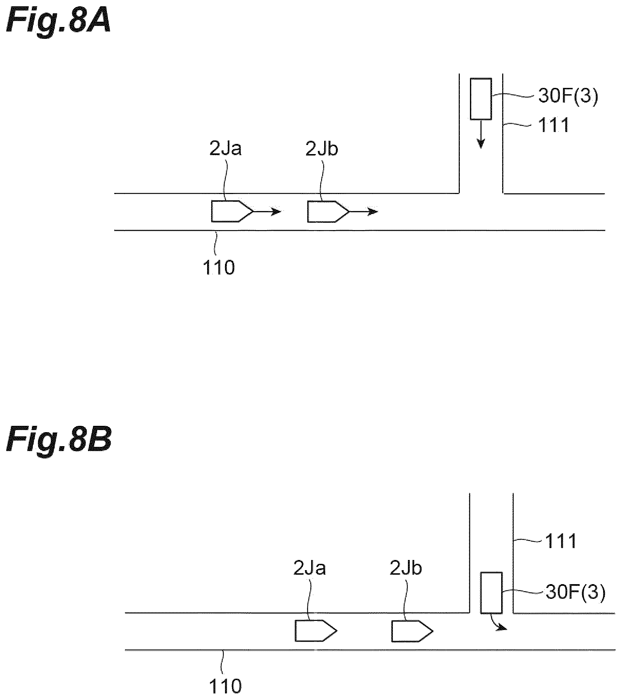

FIG. 8A is a diagram illustrating an example of a situation in which the general vehicle 3 joins in front of the autonomous driving vehicle 2. FIG. 8B is a diagram illustrating an example in which the autonomous driving vehicle 2 is stopped. FIG. 8A illustrates a lane 110, a lane 111 intersecting the lane 110, an autonomous driving vehicle 2Ja and 2Jb traveling on the lane 110, and a server communicable vehicle 30F traveling on the lane 111. The server communicable vehicle 30F traveling on the lane 111 joins the lane 110 in front of the autonomous driving vehicle 2Ja and 2Jb (crosses the front of the autonomous driving vehicle 2Ja and 2Jb).

In the situation illustrated in FIG. 8A, the stop instruction unit 16 determines that the server communicable vehicle 30F is traveling to cross in front of the autonomous driving vehicles 2Ja and 2Jb. As illustrated in FIG. 8B, the stop instruction unit 16 causes the server communicable vehicle 30F to pass first by stopping the autonomous driving vehicles 2Ja and 2Jb in front of an intersection position with the lane 111. The server communicable vehicle 30F may not necessarily join the lane 110, and may cross the lane 110 in the case of a crossroads. In FIGS. 7A to 7C and FIGS. 8A and 8B, the server incommunicable vehicle 31 may be used instead of the server communicable vehicle 30.

### [Configuration of Autonomous Driving Vehicle]

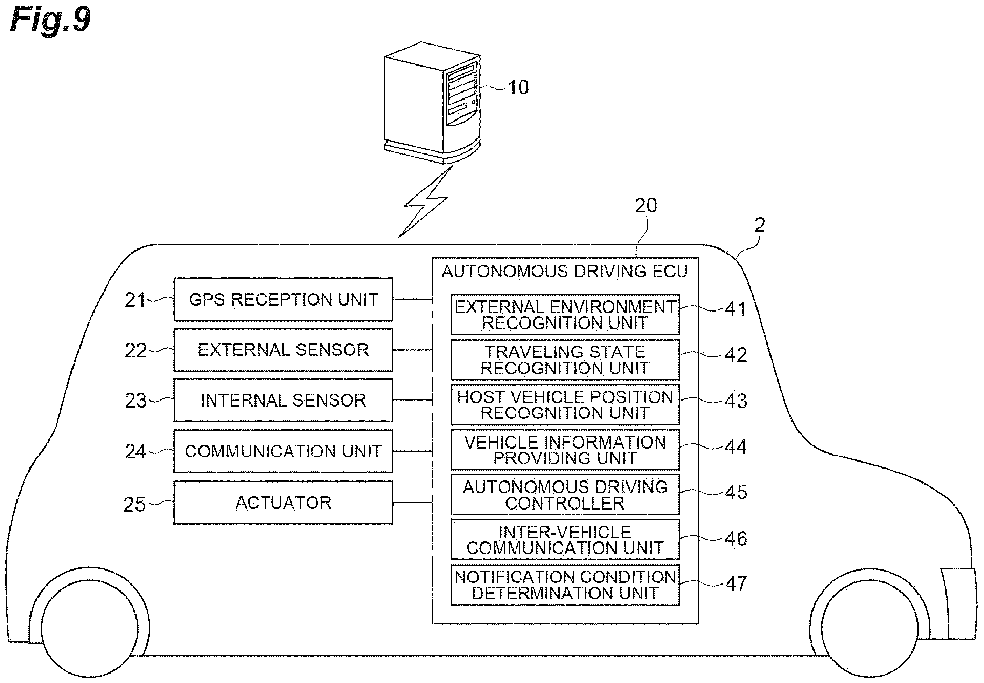

Next, an example of a configuration of the autonomous driving vehicle 2 according to the present embodiment (autonomous driving vehicle as the target of the automated valet parking by the automated valet parking system 1). FIG. 9 is a block diagram illustrating an example of the autonomous driving vehicle 2.

As illustrated in FIG. 9, the autonomous driving vehicle 2 includes an autonomous driving ECU 20 as an example. The autonomous driving ECU 20 is an electronic control unit including a CPU, a ROM, a RAM, and the like. In the autonomous driving ECU 20, for example, a program recorded in the ROM is loaded into the RAM, and various functions are implemented by the CPU executing the program loaded into the RAM. The autonomous driving ECU 20 may include a plurality of electronic units.

The autonomous driving ECU 20 is connected to a GPS reception unit 21, an external sensor 22, an internal sensor 23, a communication unit 24, and an actuator 25.

The GPS reception unit 21 measures a position of the autonomous driving vehicle 2 (for example, the latitude and longitude of the autonomous driving vehicle 2) by receiving signals from a plurality of GPS satellites. The GPS reception unit 21 transmits the measured positional information of the autonomous driving vehicle 2 to the autonomous driving ECU 20. A global navigation satellite system (GNSS) reception unit may be used instead of the GPS reception unit 21. When the parking place is indoors, the position recognition of the own vehicle using landmarks is also utilized as described later.

The external sensor 22 is an in-vehicle sensor that detects an external environment of the autonomous driving vehicle 2. The external sensor 22 includes at least a camera. The camera is an imaging device that captures an image of an external environment of the autonomous driving vehicle 2. The camera is provided, for example, behind a windshield of the autonomous driving vehicle 2 and captures an image in front of the vehicle. The camera transmits imaging information on the external environment of the autonomous driving vehicle 2 to the autonomous driving ECU 20. The camera may be a monocular camera or a stereo camera. A plurality of cameras may be provided, and in addition to the front of the autonomous driving vehicle 2, the right and left sides and the rear may be imaged.

The external sensor 22 may include a radar sensor. The radar sensor is a detection device that detects an object around the autonomous driving vehicle 2 using radio waves (for example, millimeter waves) or light. The radar sensor includes, for example, a millimeter wave radar or a light detection and ranging (LIDAR). The radar sensor transmits a radio wave or light to the vicinity of the autonomous driving vehicle 2 and detects the object by receiving the radio wave or light reflected by the object. The radar sensor transmits the detected object information to the autonomous driving ECU 20. The external sensor 22 may include a sonar sensor that detects a sound outside the autonomous driving vehicle 2.

The internal sensor 23 is an in-vehicle sensor that detects a traveling state of the autonomous driving vehicle 2. The internal sensor 23 includes a vehicle speed sensor, an acceleration sensor, and a yaw rate sensor. The vehicle speed sensor is a detector that detects the speed of the autonomous driving vehicle 2. As the vehicle speed sensor, wheel speed sensors that are provided for wheels of the autonomous driving vehicle 2 or for drive shafts that rotate integrally with the wheels and that detect rotation speeds of the respective wheels can be used. The vehicle speed sensor transmits the detected vehicle speed information (wheel speed information) to the autonomous driving ECU 20.

The acceleration sensor is a detector that detects the acceleration of the autonomous driving vehicle 2. The acceleration sensor includes, for example, a front-rear acceleration sensor that detects an acceleration in a front-rear direction of the autonomous driving vehicle 2. The acceleration sensor may include a lateral acceleration sensor that detects a lateral acceleration of the autonomous driving vehicle 2. The acceleration sensor transmits, for example, acceleration information of the autonomous driving vehicle 2 to the autonomous driving ECU 20. The yaw rate sensor is a detector that detects a yaw rate (rotational angular velocity) of the center of gravity of the autonomous driving vehicle 2 around a vertical axis. As the yaw rate sensor, for example, a gyro sensor can be used. The yaw rate sensor transmits the detected yaw rate information of the autonomous driving vehicle 2 to the autonomous driving ECU 20.

The communication unit 24 is a communication device that controls wireless communication with the outside of the autonomous driving vehicle 2. The communication unit 24 transmits and receives various types of information through communication with the parking place control server 10. The communication unit 24 transmits, for example, vehicle information to the parking place control server 10 and acquires information (for example, information on a landmark along a target route) needed for automated valet parking from the parking place control server 10.

The actuator 25 is a device used for controlling the autonomous driving vehicle 2. The actuator 25 includes at least a drive actuator, a brake actuator, and a steering actuator. The drive actuator controls the supply amount of air to the engine (throttle opening degree) according to a control signal from the autonomous driving ECU 20 to control a driving force of the autonomous driving vehicle 2. When the autonomous driving vehicle 2 is a hybrid vehicle, the control signal from the autonomous driving ECU 20 is input to a motor as a power source in addition to the supply amount of air to the engine, so that the driving force of the autonomous driving vehicle is controlled. When the autonomous driving vehicle 2 is an electric vehicle, the control signal from the autonomous driving ECU 20 is input to a motor as a power source, so that the driving force of the autonomous driving vehicle is controlled. The motor as the power source in these cases forms the actuator 25.

The brake actuator controls a brake system according to the control signal from the autonomous driving ECU 20 to control a braking force applied to the wheels of the autonomous driving vehicle 2. As the brake system, for example, a hydraulic brake system can be used. The steering actuator controls driving of an assist motor for controlling a steering torque in an electric power steering system according to the control signal from the autonomous driving ECU 20. Accordingly, the steering actuator controls the steering torque of the autonomous driving vehicle 2.

Next, an example of a functional configuration of the autonomous driving ECU 20 will be described. The autonomous driving ECU 20 includes an external environment recognition unit 41, a traveling state recognition unit 42, a host vehicle position recognition unit 43, a vehicle information providing unit 44, an autonomous driving controller 45, an inter-vehicle communication unit 46, and a notification condition determination unit 47.

The external environment recognition unit 41 recognizes the external environment of the autonomous driving vehicle 2 based on the detection result of the external sensor 22 (the image captured by the camera or the object information detected by the radar sensor). The external environment includes a relative position of a surrounding object with respect to the autonomous driving vehicle 2. The external environment may include a relative speed and a moving direction of the surrounding object with respect to the autonomous driving vehicle 2. The external environment recognition unit 41 recognizes other vehicles and objects such as pillars of the parking place by pattern matching or the like. The external environment recognition unit 41 may recognize a parking place gate, a parking place wall, a pole, a safety cone, and the like. The external environment recognition unit 41 may recognize driving boundaries in the parking place by white line recognition.

The traveling state recognition unit 42 recognizes the traveling state of the autonomous driving vehicle 2 based on the detection result of the internal sensor 23. The traveling state includes the vehicle speed of the autonomous driving vehicle 2, the acceleration of the autonomous driving vehicle 2, and the yaw rate of the autonomous driving vehicle 2. Specifically, the traveling state recognition unit 42 recognizes the vehicle speed of the autonomous driving vehicle 2 based on the vehicle speed information of the vehicle speed sensor. The traveling state recognition unit 42 recognizes the acceleration of the autonomous driving vehicle 2 based on the vehicle speed information of the acceleration sensor. The traveling state recognition unit 42 recognizes the direction of the autonomous driving vehicle 2 based on the yaw rate information of the yaw rate sensor.

The host vehicle position recognition unit 43 recognizes the position of the autonomous driving vehicle 2 in the parking place based on the parking place map information acquired from the parking place control server 10 through the communication unit 24 and the external environment recognized by the external environment recognition unit 41.

The host vehicle position recognition unit 43 recognizes the position of the autonomous driving vehicle 2 in the parking place based on the positional information of the landmark in the parking place included in the parking place map information and the relative position of the landmark with respect to the autonomous driving vehicle 2 recognized by the external environment recognition unit 41. As the landmark, an object fixedly provided in the parking place can be used.

In addition, the host vehicle position recognition unit 43 may recognize the position of the autonomous driving vehicle 2 by dead reckoning based on the detection result of the internal sensor 23. The host vehicle position recognition unit 43 may recognize the position of the autonomous driving vehicle 2 by communicating with a beacon provided in the parking place.

The vehicle information providing unit 44 provides vehicle information to the parking place control server 10 through the communication unit 24. The vehicle information providing unit 44 provides the parking place control server 10 with vehicle information including, for example, information on the position of the autonomous driving vehicle 2 in the parking place recognized by the host vehicle position recognition unit 43 at regular intervals. The vehicle information may include the recognized external status and/or traveling state of the autonomous driving vehicle 2.

The autonomous driving controller 45 executes the autonomous driving of the autonomous driving vehicle 2. The autonomous driving controller 45 generates a trajectory of the autonomous driving vehicle 2 based on, for example, the target route, the position of the autonomous driving vehicle 2, the external environment of the autonomous driving vehicle 2, and the traveling state of the autonomous driving vehicle 2. The trajectory corresponds to a travel plan for autonomous driving. The trajectory includes a path along which the vehicle travels by autonomous driving and a vehicle speed plan in autonomous driving.

The path is a trajectory on which the vehicle that is autonomously driving will travel on the target route as instructed to the automated valet parking system. The path can be, for example, data of a change in the steering angle of the autonomous driving vehicle 2 based on the position on the target route (steering angle plan). The position on the target route is, for example, a set vertical position set at predetermined intervals (for example, 1 m) in the advancing direction on the target route. The steering angle plan is data in which a target steering angle is associated with each set vertical position. The autonomous driving controller 45 generates a trajectory to pass through the center of the traveling path of the parking place along the target route, for example.

When the parking plan (target parking space and the target route) is instructed from the parking plan generation unit 12 of the parking place control server 10 in the automated valet parking, the autonomous driving controller 45 performs the automated valet parking according to the parking plan. When the parking plan does not include a steering angle plan and the vehicle speed plan corresponding to the position, the autonomous driving controller 45 generates the steering angle plan and the vehicle speed plan on the autonomous driving vehicle 2 side to realize the automated valet parking. When a stop instruction is received from the stop instruction unit 16 of the parking place control server 10, the autonomous driving controller 45 stops the autonomous driving vehicle 2 at the instructed position.

When the notification target vehicle detection unit 14 of the parking place control server 10 gives an instruction about the inter-vehicle communication with the server incommunicable vehicle 31, the inter-vehicle communication unit 46 establishes the inter-vehicle communication with the server incommunicable vehicle 31. The inter-vehicle communication unit 46 transmits various notifications to the server incommunicable vehicle 31 in response to the instruction of the parking place control server 10.

When an instruction about the approach notification is received from the notification unit 15 of the parking place control server 10 (when the autonomous driving vehicle 2 is identified as a second notification target vehicle), the notification condition determination unit 47 determines whether or not a notification condition for notifying the server incommunicable vehicle 31 connected by inter-vehicle communication of the approach is satisfied.

When the inter-vehicle distance between the server incommunicable vehicle 31 and the autonomous driving vehicle 2 (as a second notification target vehicle) is less than the distance threshold value or when the collision margin time between the server incommunicable vehicle 31 and the autonomous driving vehicle 2 (second notification target vehicle) is less than the TTC threshold value, the notification condition determination unit 47 determines that the notification condition is satisfied. When the notification condition is satisfied, the autonomous driving vehicle 2 notifies the server incommunicable vehicle 31 of the approach of the autonomous driving vehicle 2 from the inter-vehicle communication unit 46.

### [Control Method of Automated Valet Parking System]

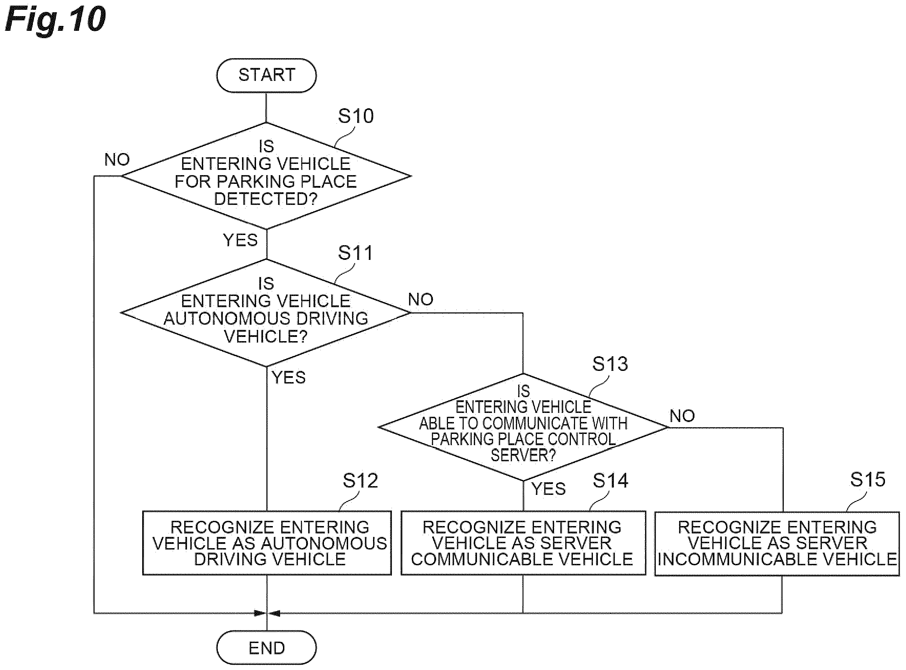

Next, an example of a control method (processing) of the automated valet parking system 1 according to the present embodiment will be described. FIG. 10 is a flowchart illustrating an example of vehicle discrimination processing.

As illustrated in FIG. 10, the parking place control server 10 of the automated valet parking system 1 detects the entering vehicle for the parking place by the vehicle information acquisition unit 11 (entering vehicle detection step). When the entering vehicle is detected (S10: YES), the parking place control server 10 shifts to S11. When the entering vehicle is not detected (S10: NO), the parking place control server 10 ends the current processing. Thereafter, the parking place control server 10 repeats the processing from S10 again after a certain time.

In S11, the parking place control server 10 determines whether or not the entering vehicle is an autonomous driving vehicle 2 by the vehicle information acquisition unit 11 (autonomous driving vehicle determination step). The vehicle information acquisition unit 11 determines whether or not the entering vehicle is an autonomous driving vehicle 2 based on, for example, communication information from the entering vehicle to the parking place control server 10. When it is not determined that the entering vehicle is an autonomous driving vehicle 2 (S11: NO), the parking place control server 10 shifts to S13. When it is determined that the entering vehicle is an autonomous driving vehicle 2 (S11: YES), the parking place control server 10 shifts to S12. In S12, the parking place control server 10 recognizes the entering vehicle as an autonomous driving vehicle 2 (autonomous driving vehicle recognition step). Thereafter, the parking place control server 10 ends the current vehicle discrimination processing.

In S13, the parking place control server 10 determines whether or not the entering vehicle can communicate with the parking place control server 10 by the communication availability determination unit 13 (communication availability determination step). When it is determined that the entering vehicle can communicate with the parking place control server 10 (S13: YES), the parking place control server 10 shifts to S14. When it is not determined that entering vehicle can communicate with the parking place control server 10 (S13: NO), the parking place control server 10 shifts to S15.

In S14, the parking place control server 10 recognizes the entering vehicle as the server communicable vehicle 30 by the communication availability determination unit 13 (server communicable vehicle recognition step). In S15, the parking place control server 10 recognizes the entering vehicle as the server incommunicable vehicle 31 by the communication availability determination unit 13 (server incommunicable vehicle recognition step). Thereafter, the parking place control server 10 ends the current vehicle discrimination processing.

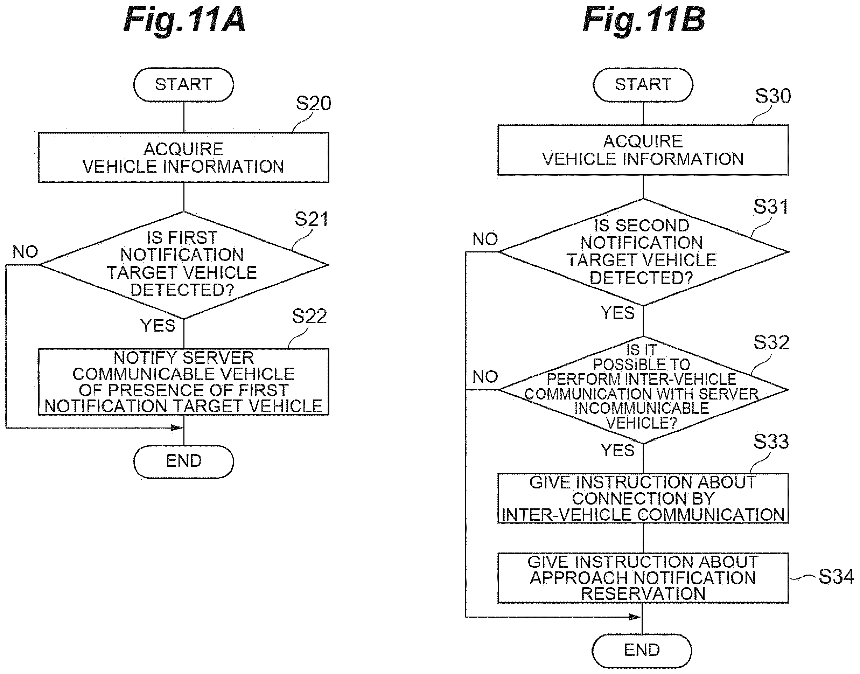

FIG. 11A is a flowchart illustrating an example of first notification target vehicle notification processing. The first notification target vehicle notification processing is executed, for example, when the server communicable vehicle 30 is present in the parking place (or in a set area of the parking place) where the automated valet parking is being performed.

As illustrated in FIG. 11A, the parking place control server 10 acquires the vehicle information by the vehicle information acquisition unit 11 in S20 (vehicle information acquisition step). The vehicle information includes the positional information of the server communicable vehicle 30 and the positional information of the autonomous driving vehicle 2.

In S21, the parking place control server 10 detects the first notification target vehicle which is the autonomous driving vehicle 2 as a notification target for the server communicable vehicle 30 by the notification target vehicle detection unit 14 (first notification target vehicle detection step). For example, when the autonomous driving vehicle 2 is present in the same set area as the server communicable vehicle 30 in the set area preset in the parking place, the notification target vehicle detection unit 14 detects the autonomous driving vehicle 2 as a first notification target vehicle.

When a first notification target vehicle is detected (S21: YES), the parking place control server 10 shifts to S22. When a first notification target vehicle is not detected (S21: NO), the parking place control server 10 ends the current first notification target vehicle notification processing.

In S22, the parking place control server 10 notifies the server communicable vehicle 30 of the presence of the first notification target vehicle by the notification unit 15 (notification step). The notification unit 15 notifies the server communicable vehicle 30 that can communicate with the parking place control server 10 of the presence of the first notification target vehicle by wireless communication. Thereafter, the parking place control server 10 ends the current first notification target vehicle notification processing.

FIG. 11B is a flowchart illustrating an example of inter-vehicle communication connection processing. The inter-vehicle communication connection processing is executed, for example, when a server incommunicable vehicle 31 is present in the parking place (or in a set area of the parking place) where the automated valet parking is being performed.

As illustrated in FIG. 11B, the parking place control server 10 acquires the vehicle information by the vehicle information acquisition unit 11 in S30 (vehicle information acquisition step). The vehicle information includes the positional information of the server incommunicable vehicle 31 and the positional information of the autonomous driving vehicle 2.

In S31, the parking place control server 10 detects the second notification target vehicle which is the autonomous driving vehicle 2 as a notification target for the server incommunicable vehicle 31 by the notification target vehicle detection unit 14 (second notification target vehicle detection step). For example, the notification target vehicle detection unit 14 detects, as the second notification target vehicle, the autonomous driving vehicle 2 positioned within a certain distance of the server incommunicable vehicle 31.

When a second notification target vehicle is detected (S31: YES), the parking place control server 10 shifts to S32. When a second notification target vehicle is not detected (S31: NO), the parking place control server 10 ends the current inter-vehicle communication connection processing.

In S32, the parking place control server 10 determines whether or not the inter-vehicle communication between the server incommunicable vehicle 31 and the second notification target vehicle is available by the notification target vehicle detection unit 14. When it is determined that the inter-vehicle communication is available (S32: YES), the parking place control server 10 shifts to S33. When it is not determined that inter-vehicle communication is available (S32: NO), the parking place control server 10 ends the current inter-vehicle communication connection processing.

In S33, the parking place control server 10 establishes the inter-vehicle communication between the second notification target vehicle and the server incommunicable vehicle 31 by the notification target vehicle detection unit 14. In S34, the parking place control server 10 instructs the second notification target vehicle by an approach notification instruction issued by the notification unit 15. Thereafter, the parking place control server 10 ends the current inter-vehicle communication connection processing.

In accordance with the automated valet parking system 1 (and the control method of the automated valet parking system 1) according to the present embodiment described above, since the notification of presence of the first notification target vehicle which is the autonomous driving vehicle 2 as the notification target can be sent to the server communicable vehicle 30 that can communicate with the parking place control server 10 among the general vehicle 3, it is possible to prevent the server communicable vehicle 30 from erroneously recognizing the autonomous driving vehicle 2 as a manually driven general vehicle 3. When the driver of the server communicable vehicle 30 grasps the presence of the autonomous driving vehicle 2, the driver can perform appropriate driving like the case of avoiding excessive approach as compared with the case where the autonomous driving vehicle 2 is erroneously recognized as the general vehicle 3.

In accordance with the automated valet parking system 1, the second notification target vehicle which is the autonomous driving vehicle 2 detected as a notification target is connected to the server incommunicable vehicle 31 by inter-vehicle communication, and thus, it is possible to prevent the server incommunicable vehicle 31 from erroneously recognizing the autonomous driving vehicle as a manually driven general vehicle 3. When the driver of the server incommunicable vehicle 31 grasps the presence of the autonomous driving vehicle 2, the driver can perform appropriate driving like the case of avoiding excessive approach as compared with the case where the autonomous driving vehicle 2 is erroneously recognized as the general vehicle 3.

In accordance with the automated valet parking system 1, since the instruction about the approach notification to be notified when the server incommunicable vehicle 31 approaches is given to the second notification target vehicle connected to the server incommunicable vehicle 31 by inter-vehicle communication, it is possible to notify the server incommunicable vehicle 31 of the approach of the second notification target vehicle which is the autonomous driving vehicle 2.

In accordance with the automated valet parking system 1, when the general vehicle 3 is approaching from behind the autonomous driving vehicle 2 or when the general vehicle 3 is traveling to cross in front of the autonomous driving vehicle 2, since the autonomous driving vehicle 2 is stopped until the general vehicle 3 passes by, it is possible to prevent the general vehicle 3 and the autonomous driving vehicle 2 from excessively approaching.

Although the embodiment of the present disclosure has been described above, the present disclosure is not limited to the above-described embodiment. The present disclosure can be implemented in various forms including various modifications and improvements based on the knowledge of those skilled in the art, including the above-described embodiment.

The notification target vehicle detection unit 14 may not necessarily detect the second notification target vehicle for the server incommunicable vehicle 31.

The notification unit 15 may not necessarily issue approach notification instructions. In this case, the autonomous driving vehicle 2 may not have the notification condition determination unit 47.

The parking place control server 10 may not necessarily have the stop instruction unit 16. It is not essential for the autonomous driving vehicle 2 executing the automated valet parking to let the general vehicle 3 pass first.

## Claims

1. An automated valet parking system (1) that has a parking place control server (10) causing an autonomous driving vehicle (2) in a parking place to be parked in a target parking space in the parking place by instructing the autonomous driving vehicle (2),
wherein the parking place control server (10) includes
a vehicle information acquisition unit (11) configured to acquire positional information of the autonomous driving vehicle (2) in the parking place and positional information of a general vehicle (3) manually driven by a driver in the parking place,
a communication availability determination unit (13) configured to determine whether or not the general vehicle (3) is a server communicable vehicle (30) that is able to communicate with the parking place control server (10),
a notification target vehicle detection unit (14) configured to detect, when the general vehicle (3) is recognized by the communication availability determination unit (13) as the server communicable vehicle (30), a first notification target vehicle that is the autonomous driving vehicle (2) as a notification target for the server communicable vehicle, based on the positional information of the autonomous driving vehicle (2) and positional information of the server communicable vehicle (30), and
a notification unit (15) configured to, when the notification target vehicle detection unit (14) detects the first notification target vehicle, notify the server communicable vehicle of presence of the first notification target vehicle,
**characterized in that** the notification target vehicle detection unit (14) is configured to:
- detect a second notification target vehicle which is the autonomous driving vehicle (2) as a notification target for a server incommunicable vehicle (31) which is the general vehicle (3) determined not to be the server communicable vehicle by the communication availability determination unit (13), based on positional information of the server incommunicable vehicle (31) and the positional information of the autonomous driving vehicle (2), and establish, when inter-vehicle communication between the server incommunicable vehicle (31) and the second notification target vehicle is available, the inter-vehicle communication between the second notification target vehicle and the server incommunicable vehicle,
- detect the autonomous driving vehicle (2) as the first notification target vehicle when the distance between the target route of the autonomous driving vehicle (2) and the server communicable vehicle (30) is less than a first route distance threshold value, and detect the autonomous driving vehicle (2) as the second notification target vehicle when the distance between the target route of the autonomous driving vehicle (2) and the server incommunicable vehicle (31) is less than a second route distance threshold value,
**in that** the second route distance threshold value is a threshold value larger than the first route distance threshold value, and
**in that** the notification unit (15) is configured to, when an inter-vehicle distance between the server incommunicable vehicle and the second notification target vehicle is less than a distance threshold value or when a collision margin time between the server incommunicable vehicle (31) and the second notification target vehicle is less than a TTC threshold value, instruct the second notification target vehicle (2) connected to the server incommunicable vehicle (31) by the inter-vehicle communication to notify the server incommunicable vehicle (31) of approach of the second notification target vehicle (2) by the inter-vehicle communication.

2. The automated valet parking system (1) according to claim 1, wherein the parking place control server includes a stop instruction unit (16) configured to, when the general vehicle (3) is approaching from behind the autonomous driving vehicle (2) or when the general vehicle (3) is traveling to cross in front of the autonomous driving vehicle (2), stop the autonomous driving vehicle (2) until the general vehicle (3) passes by.

3. A control method of an automated valet parking system (1) that has a parking place control server (10) causing an autonomous driving vehicle (2) in a parking place to be parked in a target parking space in the parking place by instructing the autonomous driving vehicle (2), the method comprising:
acquiring positional information of the autonomous driving vehicle (2) in the parking place and positional information of a general vehicle (3) manually driven by a driver in the parking place;
determining whether or not the general vehicle (3) is a server communicable vehicle (30) that is able to communicate with the parking place control server (10);
detecting, when the general vehicle (3) is recognized as the server communicable vehicle (30), a first notification target vehicle that is the autonomous driving vehicle (2) as a notification target for the server communicable vehicle (30) based on the positional information of the autonomous driving vehicle (2) and positional information of the server communicable vehicle (30); and
notifying, when the first notification target vehicle (2) is detected in the step of detecting the first notification target vehicle, the server communicable vehicle (30) of presence of the first notification target vehicle (2)
**characterized in that** it comprises:
detecting a second notification target vehicle which is the autonomous driving vehicle (2) as a notification target for a server incommunicable vehicle (31) which is the general vehicle (3) determined not to be the server communicable vehicle by the communication availability determination unit (13), based on positional information of the server incommunicable vehicle (31) and the positional information of the autonomous driving vehicle (2), and establishing, when inter-vehicle communication between the server incommunicable vehicle (31) and the second notification target vehicle is available, the inter-vehicle communication between the second notification target vehicle and the server incommunicable vehicle,
detecting the autonomous driving vehicle (2) as the first notification target vehicle when the distance between the target route of the autonomous driving vehicle (2) and the server communicable vehicle (30) is less than a first route distance threshold value, and detecting the autonomous driving vehicle (2) as the second notification target vehicle when the distance between the target route of the autonomous driving vehicle (2) and the server incommunicable vehicle (31) is less than a second route distance threshold value, the second route distance threshold value being a threshold value larger than the first route distance threshold value, and
when an inter-vehicle distance between the server incommunicable vehicle and the second notification target vehicle is less than a distance threshold value or when a collision margin time between the server incommunicable vehicle (31) and the second notification target vehicle is less than a TTC threshold value, instructing the second notification target vehicle (2) connected to the server incommunicable vehicle (31) by the inter-vehicle communication to notify the server incommunicable vehicle (31) of approach of the second notification target vehicle (2) by the inter-vehicle communication.

## Patentansprüche

1. Automatisches Parksystem (1), das einen Parkplatz-Steuerungsserver (10) aufweist, der ein autonom fahrendes Fahrzeug (2) auf einem Parkplatz veranlasst, auf einem Zielparkplatz auf dem Parkplatz zu parken, indem er das autonom fahrende Fahrzeug (2) anweist,
wobei der Parkplatz-Steuerungsserver (10) Folgendes beinhaltet
eine Fahrzeuginformation-Erfassungseinheit (11), die konfiguriert ist, um Positionsinformationen des autonom fahrenden Fahrzeugs (2) auf dem Parkplatz und Positionsinformationen eines allgemeinen Fahrzeugs (3), das manuell von einem Fahrer auf dem Parkplatz gefahren wird, zu erfassen,
eine Kommunikationsverfügbarkeit-Bestimmungseinheit (13), die konfiguriert ist, um zu bestimmen, ob das allgemeine Fahrzeug (3) ein mit dem Server kommunikationsfähiges Fahrzeug (30) ist, das in der Lage ist, mit dem Parkplatz-Steuerungsserver (10) zu kommunizieren,
eine Benachrichtigungszielfahrzeug-Erfassungseinheit (14), die konfiguriert ist, um, wenn das allgemeine Fahrzeug (3) von der Benachrichtigungsverfügbarkeit-Bestimmungseinheit (13) als das mit dem Server kommunikationsfähige Fahrzeug (30) erkannt wird, basierend auf den Positionsinformationen des autonom fahrenden Fahrzeugs (2) und den Positionsinformationen des mit dem Server kommunikationsfähigen Fahrzeugs (30) ein erstes Benachrichtigungszielfahrzeug, das das autonom fahrende Fahrzeug (2) ist, als ein Benachrichtigungsziel für das mit dem Server kommunikationsfähige Fahrzeug zu erfassen, und
eine Benachrichtigungseinheit (15), die konfiguriert ist, um, wenn die Benachrichtigungszielfahrzeug-Erfassungseinheit (14) das erste Benachrichtigungszielfahrzeug erfasst, das mit dem Server kommunikationsfähige Fahrzeug über die Anwesenheit des ersten Benachrichtigungszielfahrzeugs zu benachrichtigen,
**dadurch gekennzeichnet, dass** die Benachrichtigungszielfahrzeug-Erfassungseinheit (14) zu Folgendem konfiguriert ist:
- Erfassen eines zweiten Benachrichtigungszielfahrzeugs, das das autonom fahrende Fahrzeug (2) ist, als ein Benachrichtigungsziel für ein nicht mit dem Server kommunikationsfähiges Fahrzeug (31), das das allgemeine Fahrzeug (3) ist, das von der Kommunikationsverfügbarkeit-Bestimmungseinheit (13) als nicht mit dem Server kommunikationsfähiges Fahrzeug bestimmt wird, basierend auf Positionsinformationen des nicht mit dem Server kommunikationsfähigen Fahrzeugs (31) und den Positionsinformationen des autonom fahrenden Fahrzeugs (2), und Herstellen, wenn eine Kommunikation zwischen Fahrzeugen zwischen dem nicht mit dem Server kommunikationsfähigen Fahrzeug (31) und dem zweiten Benachrichtigungszielfahrzeug verfügbar ist, der Kommunikation zwischen Fahrzeugen zwischen dem zweiten Benachrichtigungszielfahrzeug und dem nicht mit dem Server kommunikationsfähigen Fahrzeug,
- Erfassen des autonom fahrenden Fahrzeugs (2) als das erste Benachrichtigungszielfahrzeug, wenn der Abstand zwischen der Zielroute des autonom fahrenden Fahrzeugs (2) und dem mit dem Server kommunikationsfähigen Fahrzeug (30) kleiner ist als ein erster Routenabstandsschwellenwert, und Erfassen des autonom fahrenden Fahrzeugs (2) als das zweite Benachrichtigungszielfahrzeug, wenn der Abstand zwischen der Zielroute des autonom fahrenden Fahrzeugs (2) und dem nicht mit dem Server kommunikationsfähigen Fahrzeug (31) kleiner ist als ein zweiter Routenabstandsschwellenwert,
dass der zweite Routenabstandsschwellenwert ein Schwellenwert ist, der größer ist als der erste Routenabstandsschwellenwert, und
dass die Benachrichtigungseinheit (15) konfiguriert ist, um, wenn ein Fahrzeugabstand zwischen dem nicht mit dem Server kommunikationsfähigen Fahrzeug und dem zweiten Benachrichtigungszielfahrzeug kleiner ist als ein Abstandsschwellenwert oder wenn eine Kollisionsspannenzeit zwischen dem nicht mit dem Server kommunikationsfähigen Fahrzeug (31) und dem zweiten Benachrichtigungszielfahrzeug kleiner ist als ein TTC-Schwellenwert, Anweisen des zweiten Benachrichtigungszielfahrzeugs (2), das mit dem nicht mit dem Server kommunikationsfähigen Fahrzeug (31) durch die Kommunikation zwischen den Fahrzeugen verbunden ist, das nicht mit dem Server kommunikationsfähige Fahrzeug (31) über die Kommunikation zwischen den Fahrzeugen über die Annäherung des zweiten Benachrichtigungszielfahrzeugs (2) zu benachrichtigen.

2. Automatisches Parksystem (1) nach Anspruch 1, wobei der Parkplatz-Steuerungsserver eine Anhalteanweisungseinheit (16) beinhaltet, die konfiguriert ist, um, wenn sich das allgemeine Fahrzeug (3) von hinten dem autonom fahrenden Fahrzeug (2) nähert oder wenn das allgemeine Fahrzeug (3) fährt, um vor dem autonom fahrenden Fahrzeug (2) zu kreuzen, das autonom fahrende Fahrzeug (2) anzuhalten, bis das allgemeine Fahrzeug (3) vorbeifährt.

3. Steuerungsverfahren für ein automatisches Parksystem (1), das einen Parkplatz-Steuerungsserver (10) aufweist, der ein autonom fahrendes Fahrzeug (2) auf einem Parkplatz veranlasst, auf einem Zielparkplatz auf dem Parkplatz zu parken, indem das autonom fahrende Fahrzeug (2) angewiesen wird, das Verfahren umfassend:
Erfassen von Positionsinformationen des autonom fahrenden Fahrzeugs (2) auf dem Parkplatz und Positionsinformationen eines allgemeinen Fahrzeugs (3), das manuell von einem Fahrer auf dem Parkplatz gefahren wird;
Bestimmen, ob das allgemeine Fahrzeug (3) ein mit dem Server kommunikationsfähiges Fahrzeug (30) ist, das in der Lage ist, mit dem Parkplatz-Steuerungsserver (10) zu kommunizieren;
Erfassen, wenn das allgemeine Fahrzeug (3) als das mit dem Server kommunikationsfähige Fahrzeug (30) erkannt wird, eines ersten Benachrichtigungszielfahrzeugs, das das autonom fahrende Fahrzeug (2) ist, als ein Benachrichtigungsziel für das mit dem Server kommunikationsfähige Fahrzeug (30) basierend auf den Positionsinformationen des autonom fahrenden Fahrzeugs (2) und den Positionsinformationen des mit dem Server kommunikationsfähigen Fahrzeugs (30); und
Benachrichtigen des mit dem Server kommunikationsfähigen Fahrzeugs (30) über das Vorhandensein des ersten Benachrichtigungszielfahrzeugs (2), wenn das erste Benachrichtigungszielfahrzeug (2) in dem Erfassungsschritt des ersten Benachrichtigungszielfahrzeugs erfasst wird;
**dadurch gekennzeichnet, dass** es Folgendes umfasst:
Erfassen eines zweiten Benachrichtigungszielfahrzeugs, das das autonom fahrende Fahrzeug (2) ist, als ein Benachrichtigungsziel für ein nicht mit dem Server kommunikationsfähiges Fahrzeug (31), das das allgemeine Fahrzeug (3) ist, das von der Kommunikationsverfügbarkeit-Bestimmungseinheit (13) als nicht mit dem Server kommunikationsfähiges Fahrzeug bestimmt wird, basierend auf Positionsinformationen des nicht mit dem Server kommunikationsfähigen Fahrzeugs (31) und den Positionsinformationen des autonom fahrenden Fahrzeugs (2), und Herstellen, wenn eine Kommunikation zwischen Fahrzeugen zwischen dem nicht mit dem Server kommunikationsfähigen Fahrzeug (31) und dem zweiten Benachrichtigungszielfahrzeug verfügbar ist, der Kommunikation zwischen Fahrzeugen zwischen dem zweiten Benachrichtigungszielfahrzeug und dem nicht mit dem Server kommunikationsfähigen Fahrzeug,
Erfassen des autonom fahrenden Fahrzeugs (2) als das erste Benachrichtigungszielfahrzeug, wenn der Abstand zwischen der Zielroute des autonom fahrenden Fahrzeugs (2) und dem mit dem Server kommunikationsfähigen Fahrzeug (30) kleiner ist als ein erster Routenabstandsschwellenwert, und Erfassen des autonom fahrenden Fahrzeugs (2) als das zweite Benachrichtigungszielfahrzeug, wenn der Abstand zwischen der Zielroute des autonom fahrenden Fahrzeugs (2) und dem nicht mit dem Server kommunikationsfähigen Fahrzeug (31) kleiner ist als ein zweiter Routenabstandsschwellenwert, wobei der zweite Routenabstandsschwellenwert ein Schwellenwert ist, der größer ist als der erste Routenabstandsschwellenwert, und
wenn ein Fahrzeugabstand zwischen dem nicht mit dem Server kommunikationsfähigen Fahrzeug und dem zweiten Benachrichtigungszielfahrzeug kleiner ist als ein Abstandsschwellenwert oder wenn eine Kollisionsspannenzeit zwischen dem nicht mit dem Server kommunikationsfähigen Fahrzeug (31) und dem zweiten Benachrichtigungszielfahrzeug kleiner ist als ein TTC-Schwellenwert ist, Anweisen des zweiten Benachrichtigungszielfahrzeugs (2), das mit dem nicht mit dem Server kommunikationsfähige Fahrzeug (31) durch die Fahrzeugkommunikation verbunden ist, das nicht mit dem Server kommunikationsfähige Fahrzeug (31) über die Fahrzeugkommunikation über die Annäherung des zweiten Benachrichtigungszielfahrzeugs (2) zu benachrichtigen.

## Revendications

1. Système automatisé de service voiturier (1) qui a un serveur de commande d'emplacement de stationnement (10) qui amène un véhicule à conduite autonome (2) dans un emplacement de stationnement pour le garer dans un espace de stationnement de cible dans l'emplacement de stationnement en donnant des instructions au véhicule à conduite autonome (2),
le serveur de commande d'emplacement de stationnement (10) comprenant
une unité d'acquisition d'information de véhicule (11) configurée pour acquérir de l'information de position du véhicule à conduite autonome (2) dans l'emplacement de stationnement et de l'information de position d'un véhicule général (3) conduit manuellement par un conducteur dans l'emplacement de stationnement,
une unité de détermination de disponibilité de communication (13) configurée pour déterminer si le véhicule général (3) est ou non un véhicule pouvant communiquer avec un serveur (30) qui est capable de communiquer avec le serveur de commande d'emplacement de stationnement (10),
une unité de détection de véhicule de cible de notification (14) configurée pour détecter, quand le véhicule général (3) est identifié par l'unité de détermination de disponibilité de communication (13) comme le véhicule pouvant communiquer avec un serveur (30), un premier véhicule de cible de notification qui est le véhicule à conduite autonome (2) comme cible de notification pour le véhicule pouvant communiquer avec un serveur, sur la base de l'information de position du véhicule à conduite autonome (2) et de l'information de position du véhicule pouvant communiquer avec un serveur (30), et
une unité de notification (15) configurée pour, quand l'unité de détection de véhicule de cible de notification (14) détecte le premier véhicule de cible de notification, notifier au véhicule pouvant communiquer avec un serveur la présence du premier véhicule de cible de notification,
**caractérisé en ce que** l'unité de détection de véhicule de cible de notification (14) est configurée pour :
- détecter un deuxième véhicule de cible de notification qui est le véhicule à conduite autonome (2) comme cible de notification pour un véhicule ne pouvant pas communiquer avec un serveur (31) qui est le véhicule général (3) déterminé comme n'étant pas le véhicule pouvant communiquer avec un serveur par l'unité de détermination de disponibilité de communication (13), sur la base d'une information de position du véhicule ne pouvant pas communiquer avec un serveur (31) et de l'information de position du véhicule à conduite autonome (2), et établir, quand une communication entre véhicules entre le véhicule ne pouvant pas communiquer avec un serveur (31) et le deuxième véhicule de cible de notification est disponible, la communication entre véhicules entre le deuxième véhicule de cible de notification et le véhicule ne pouvant pas communiquer avec un serveur,
- détecter le véhicule à conduite autonome (2) comme premier véhicule de cible de notification quand la distance entre l'itinéraire de cible du véhicule à conduite autonome (2) et le véhicule pouvant communiquer avec un serveur (30) est inférieure à une première valeur de seuil de distance d'itinéraire, et détecter le véhicule à conduite autonome (2) comme deuxième véhicule de cible de notification quand la distance entre l'itinéraire de cible du véhicule à conduite autonome (2) et le véhicule ne pouvant pas communiquer avec un serveur (31) est inférieure à une deuxième valeur de seuil de distance d'itinéraire,
**en ce que** la deuxième valeur de seuil de distance d'itinéraire est une valeur de seuil plus grande que la première valeur de seuil de distance d'itinéraire, et
**en ce que** l'unité de notification (15) est configurée pour, quand une distance entre véhicules entre le véhicule ne pouvant pas communiquer avec un serveur et le deuxième véhicule de cible de notification est inférieure à une valeur de seuil de distance ou quand un temps de marge de collision entre le véhicule ne pouvant pas communiquer avec un serveur (31) et le deuxième véhicule de cible de notification est inférieur à une valeur de seuil de temps jusqu'à une collision, donner des instructions au deuxième véhicule de cible de notification (2) relié au véhicule ne pouvant pas communiquer avec un serveur (31) grâce à la communication entre véhicules pour notifier au véhicule ne pouvant pas communiquer avec un serveur (31) l'approche du deuxième véhicule de cible de notification (2) grâce à la communication entre véhicules.

2. Système automatisé de service voiturier (1) selon la revendication 1, dans lequel le serveur de commande d'emplacement de stationnement comprend un module d'instruction d'arrêt (16) configuré pour, quand le véhicule général (3) s'approche par derrière le véhicule à conduite autonome (2) ou quand le véhicule général (3) se déplace pour un croisement devant le véhicule à conduite autonome (2), arrêter le véhicule à conduite autonome (2) jusqu'à ce que le véhicule général (3) passe.

3. Procédé de commande d'un système automatisé de service voiturier (1) qui a un serveur de commande d'emplacement de stationnement (10) qui amène un véhicule à conduite autonome (2) dans un emplacement de stationnement pour le garer dans un espace de stationnement de cible dans l'emplacement de stationnement en donnant des instructions au véhicule à conduite autonome (2), le procédé comprenant :
l'acquisition d'une information de position du véhicule à conduite autonome (2) dans l'emplacement de stationnement et d'une information de position d'un véhicule général (3) conduit manuellement par un conducteur dans l'emplacement de stationnement ;
la détermination du fait que le véhicule général (3) est ou non un véhicule pouvant communiquer avec un serveur (30) qui est capable de communiquer avec le serveur de commande d'emplacement de stationnement (10) ;
la détection, quand le véhicule général (3) est identifié comme véhicule pouvant communiquer avec un serveur (30), d'un premier véhicule de cible de notification qui est le véhicule à conduite autonome (2) comme cible de notification pour le véhicule pouvant communiquer avec un serveur (30) sur la base de l'information de position du véhicule à conduite autonome (2) et d'une information de position du véhicule pouvant communiquer avec un serveur (30) ; et
la notification, quand le premier véhicule de cible de notification (2) est détecté dans l'étape de détection du premier véhicule de cible de notification, au véhicule pouvant communiquer avec un serveur (30) de la présence du premier véhicule de cible de notification (2)
**caractérisé en ce qu'**il comprend :
la détection d'un deuxième véhicule de cible de notification qui est le véhicule à conduite autonome (2) comme cible de notification pour un véhicule ne pouvant pas communiquer avec un serveur (31) qui est le véhicule général (3) déterminé comme n'étant pas le véhicule pouvant communiquer avec un serveur par l'unité de détermination de disponibilité de communication (13), sur la base d'une information de position du véhicule ne pouvant pas communiquer avec un serveur (31) et de l'information de position du véhicule à conduite autonome (2), et l'établissement, quand une communication entre véhicules entre le véhicule ne pouvant pas communiquer avec un serveur (31) et le deuxième véhicule de cible de notification est disponible, de la communication entre véhicules entre le deuxième véhicule de cible de notification et le véhicule ne pouvant pas communiquer avec un serveur,
la détection du véhicule à conduite autonome (2) comme premier véhicule de cible de notification quand la distance entre l'itinéraire de cible du véhicule à conduite autonome (2) et le véhicule pouvant communiquer avec un serveur (30) est inférieure à une première valeur de seuil de distance d'itinéraire, et la détection du véhicule à conduite autonome (2) comme deuxième véhicule de cible de notification quand la distance entre l'itinéraire de cible du véhicule à conduite autonome (2) et le véhicule ne pouvant pas communiquer avec un serveur (31) est inférieure à une deuxième valeur de seuil de distance d'itinéraire, la deuxième valeur de seuil de distance d'itinéraire étant une valeur de seuil plus grande que la première valeur de seuil de distance d'itinéraire, et
quand une distance entre véhicules entre le véhicule ne pouvant pas communiquer avec un serveur et le deuxième véhicule de cible de notification est inférieure à une valeur de seuil de distance ou quand un temps de marge de collision entre le véhicule ne pouvant pas communiquer avec un serveur (31) et le deuxième véhicule de cible de notification est inférieur à une valeur de seuil de temps jusqu'à une collision, la transmission d'instructions au deuxième véhicule de cible de notification (2) relié au véhicule ne pouvant pas communiquer avec un serveur (31) grâce à la communication entre véhicules pour notifier au véhicule ne pouvant pas communiquer avec un serveur (31) l'approche du deuxième véhicule de cible de notification (2) grâce à la communication entre véhicules.
